# EUROPEAN PATENT SPECIFICATION

(11) **EP 4 331 926 B1**
(45) Date of publication and mention of the grant of the patent: **04.03.2026**
(21) Application number: 23194918.1
(22) Date of filing: 01.09.2023
(51) Int. Cl.: B60T 7/20, B60T 8/17, B60T 13/66

(54) **A METHOD OF OPERATING A BRAKING SYSTEM**
VERFAHREN ZUM BETRIEB EINES BREMSSYSTEMS
PROCÉDÉ DE FONCTIONNEMENT D'UN SYSTÈME DE FREINAGE

(30) Priority: 02.09.2022 GB 202212797
(43) Date of publication of application: 06.03.2024
(73) Proprietor: Haldex Brake Products AB, 26124 Landskrona (SE)
(72) Inventor: Harrison, Dudley, Lindley, CV13 6DE (GB)
(74) Representative: Forresters IP LLP

(56) References cited:
- EP-A1- 1 800 916
- EP-A1- 2 631 095
- CA-A1- 2 985 011
- US-A1- 2019 315 330

## Description

### FIELD

The present invention relates to a braking system and a method of operating a braking system.

### BACKGROUND

Braking systems for use in trailer vehicle combinations are well known. A towing vehicle typically provides fluid/air to a connected trailer for use in the braking system and a towing vehicle electronic braking system EBS (including a control unit) relays information about required braking to a trailer electronic braking system EBS / electronic control unit ECU.

EP1800916 discloses a method involving adjusting a level of a body of a trailer vehicle in comparison with wheels of a vehicle, and alternatively releasing and locking brakes at left and right sides of the wheels of the vehicle. EP2631095 discloses an electronic level control system for a trailer comprising an electronic level control adapted to control air flow in an air suspension on a trailer.

Embodiments of the present invention seek to improve one or more problems associated with the prior art.

### BRIEF DESCRIPTION OF THE INVENTION

According to a first aspect of the invention we provide a method of operating a braking system for a trailer vehicle including an electronic control unit (ECU) which is operable to control at least a first brake assembly associated with at least a first wheel on a first side of a vehicle and a second brake assembly associated with at least a second wheel on a second side of the vehicle, wherein the method includes:
assessing that a first brake demand signal corresponding to a demand for persistent braking has been received;
receiving a second brake demand signal corresponding to a demand for temporary braking;
in response to receiving the second brake demand signal, performing a controlled brake release cycle including:
   releasing the first brake assembly followed by reapplying the first brake assembly, and subsequently
   releasing the second brake assembly followed by reapplying the second brake assembly.

The method may include assessing whether a controlled brake release cycle has occurred previously and if a positive response is present, altering a subsequent controlled brake release. The altered subsequent controlled brake release may include:
releasing the second brake assembly followed by reapplying the second brake assembly, and subsequently
releasing the first brake assembly followed by reapplying the first brake assembly.

The previous controlled brake release cycle may have to be within predetermined time interval to initiate alteration of the subsequent controlled brake release cycle.

The method may include a predetermined time interval separating reapplying any brake assembly and releasing the respective next brake assembly. The predetermined time interval may be between around 0 and 1 seconds and preferably around 0.5 seconds.

A brake assembly may be released over a predetermined release interval. The release interval may be between around 0 and 1 seconds and preferably around 0.5 seconds. The brake assembly may be released at a substantially constant rate over the release interval.

The method may further include a step of assessing a gradient of a ground surface on which the vehicle stands, or assessing a gradient of the vehicle. The controlled brake release cycle may be aborted if the gradient is higher than a predetermined gradient threshold. Optionally, the predetermined gradient threshold is between around 2 to 4 degrees.

The method may further include assessing if the vehicle has moved since ignition. Optionally, if the vehicle has moved, the controlled brake release cycle may be aborted.

The method may further include assessing that both the first and second brake demand signals have ended and releasing all the brake assemblies to allow the vehicle to move. The method may include when the first and second brake assemblies are reapplied, an associated pressure / brake force at its respective wheel is in accordance with the second brake demand.

The method may further include aborting the controlled brake release cycle if the second brake demand signal ends and / or drops to zero.

The first and / or second brake demand signals may be generated and sent by a towing vehicle connected to the trailer vehicle.

According to a second aspect of the invention we provide a braking system for a trailer vehicle, including
a first brake assembly associated with at least a first wheel on a first side of the vehicle,
a second brake assembly associated with at least a second wheel on a second side of the vehicle, and
an electronic control unit (ECU) which controls operation of the first and second brake assemblies, wherein the ECU is operable to:
   receive a first brake demand signal corresponding to a demand for persistent braking and apply the first and second brake assemblies, and
   in response to receiving a second brake demand signal corresponding to a demand for temporary braking, perform a controlled brake release cycle in which the first brake assembly is released and reapplied and subsequently the second brake assembly is released and reapplied.

The ECU may be operable to release and reapply the second brake assembly a second time and subsequently release and reapply the first brake assembly again as part of a subsequent controlled brake release cycle.

The braking system may further include a third wheel which is associated with the first brake assembly and a fourth wheel while is associated with the second brake assembly.

An accelerometer module may be provided. The accelerometer module may be operable to send data relating to an orientation of the vehicle or of a ground surface on which the vehicle stands to the ECU so that a gradient of the vehicle can be calculated / assessed. The accelerometer module may provide data relating to an orientation along a singles axis, or along two axes or along three axes. The ECU may be operable to cancel a planned a controlled brake release cycle if the data from the accelerometer module indicates that the vehicle is on a gradient at or above a predetermined gradient threshold.

The braking system may include a third brake assembly and the controlled brake release cycle may further include releasing and reapplying the third brake assembly.

Optionally, the first brake demand signal may be generated by a handbrake (or another driver operated switch). Optionally, the second brake demand signal may be generated by pressure applied to a foot pedal.

### BRIEF DESCRIPTION OF THE FIGURES

In order that the present disclosure may be more readily understood, preferable embodiments thereof will now be described, by way of example only, with reference to the accompanying drawings, in which:
Figure 1 is a schematic illustration of a braking system, and
Figure 2 is a flow diagram showing a method of operating the braking system.

### DETAILED DESCRIPTION

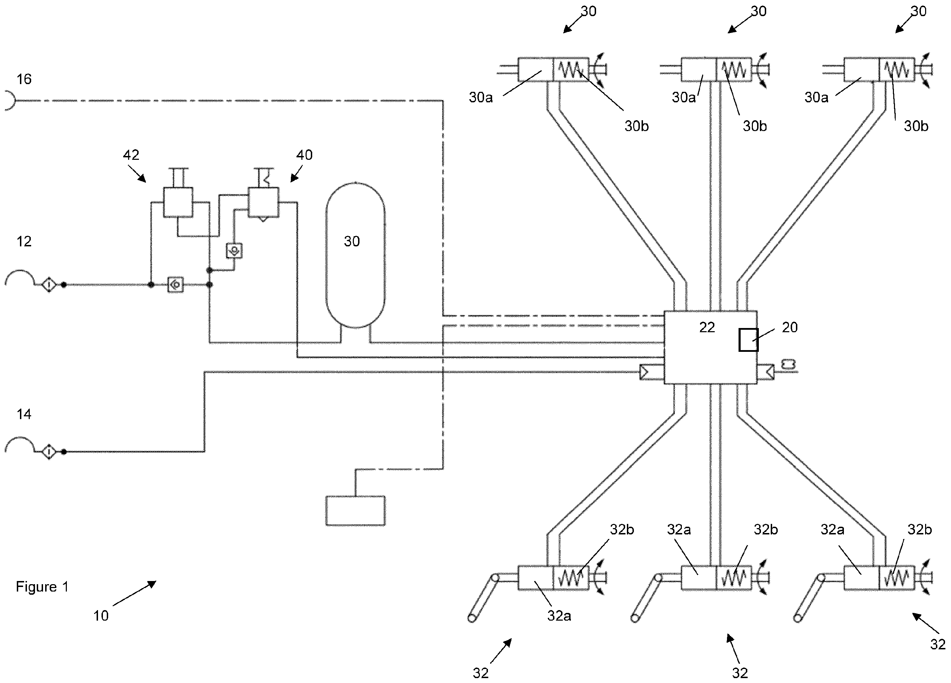

A braking system 10 is illustrated in figure 1. The braking system 10 is for a trailer vehicle (e.g. the component parts will be located on the trailer). Primarily, the braking system 10 is used on a trailer vehicle of the type that is connected to a towing vehicle. The towing vehicle has its own braking system and is able to send signals to the trailer braking system 10 so that brakes on the trailer can be operated and / or coordinated with the towing vehicle brakes.

The towing vehicle (more specifically the braking system of the towing vehicle) is connected to the trailer braking system through two pneumatic connections and at least one electronic connection. A supply line 12 connection provides a constant source of fluid to the trailer braking system 10. A control line 14 connection is connected to a brake demand on the towing vehicle (for example, a foot brake pedal or the like). Thus, air is provided to the trailer either by a connected generator on the towing vehicle (through the supply line 12) or from a reservoir 30 present on the trailer.

The electronic connection 16 allows signals to be relayed to an electronic control unit (ECU) 20 on the trailer. In the illustrated example braking system 10 the ECU 20 forms part of the electronic brake system (EBS) 22. In embodiments, the towing vehicle has its own electronic control unit (forming part of the towing vehicle brake system) which is connected to the ECU 20 through the electronic connection 16. In embodiments, the electronic connection 16 is provided through an ISO 7638 connector (though, of course, other connectors are available for use and also allow brake signals to be sent through the connector to the trailer). In embodiments, electronic signals are sent using a CAN connection (for example, signals may be sent according to ISO 11992).

The trailer includes one or more axles and each axle rotatably supports a wheel at each end. Each wheel is associated with its own brake cylinder 30, 32. In the illustrated example, each brake cylinder 30, 32 has two chambers. The first chamber 30a, 32a is the service brake chamber and provides service braking. The service brake is used to apply brake force the wheels according to a brake demand. The brake demand could come from a driver applying a foot to the brake pedal or, alternatively, the EBS 22 can control the service brake autonomously. Either way, the way in which a brake pressure is developed (in other words, the manner in which the brake is applied) is the same.

The braking system 10 includes a first brake assembly and a second brake assembly. Each brake assembly is associated with at least one wheel. In other words, the brake assembly may include a one or more service brakes, each of which is operable to apply a brake force to its associated wheel (or the brake is released, so the wheel is freely rotatable).

In the illustrated example, there are three brake cylinders 30 on a first side of the vehicle (the first side brake cylinders 30). Each first side brake cylinder 30 is operable to apply a brake force to an associated wheel (not shown) - i.e. the first chamber 30a of each cylinder 30 provides the service braking and the second chamber 30b provides the spring brakes. Likewise, there are three brake cylinders 32 on a second side of the vehicle (the second side brake cylinders 32). Each second side brake cylinder 32 is operable to apply a brake force to an associated wheel (also not shown) - i.e. the first chamber 32a of each cylinder 32 provides the service braking and the second chamber 32b provides the spring braking.

In embodiments, each brake assembly includes a modulator which controls air / fluid travelling to the one or more first brake chambers 30a, 32a. More specifically, the first brake assembly includes a first modulator and the second brake assembly includes a second modulator.

The modulator has three states - a build state, a hold state, and an exhaust state and each causes a different effect in the associated brake cylinder(s). When the modulator adopts the build state, fluid is permitted into the modulator (from a source of air) and pressure is built. The increasing pressure is built accordingly at the associated brake cylinder - as such the brake applies increasing brake force to the associated wheel.

In the hold state, the modulator stops allowing additional pressure to build and maintains a constant pressure. The pressure is held at a constant level and as such the brake force developed at the brake cylinder is also held at that level.

In the exhaust state, the modulator permits the fluid (e.g. the fluid that has collected in its chamber) to exhaust to atmosphere. Thus, the pressure drops and the brake cylinder operates accordingly to reduce the pressure present (and, thus, the brake force affecting the associated wheel is reduced). The exhaust state is used when braking / a braking force is no longer required and / or not required (and the pressure in the brake cylinder is reduced accordingly).

The first brake assembly is in control of one / the first side of the vehicle (and the second brake assembly is in control of the other / second side of the vehicle. In the illustrated example, the first brake assembly is associated with the first side brake cylinders 30 (i.e. the brakes on the left or right side) and the second brake assembly is associated with the second side brake cylinders 32 (i.e. the brakes on the other / opposing side not controlled by the first brake assembly). Thus, the first brake assembly controls the application and release of the (service) brake on one side of the vehicle and the second brake assembly controls the application and release of the (service) brake on the other side of the vehicle.

It should be appreciated that more brake assemblies could be provided. For example, more than one brake assembly could control one side of the vehicle - a third brake assembly could be provided, so that the first brake assembly controls the brakes on the first side front and the third brake assembly controls the brakes on the first side rear (likewise with the other side and a fourth brake assembly).

In some embodiments, a third brake assembly could be provided that controls a rear axle (i.e. both the left and right sides). However, this is not provided without the first and second brake assemblies described above that control the first and second sides independently. This option is described further below but it should be appreciated that as long as the braking system 10 includes a separate brake assembly for each side of the trailer in some capacity the described method can be used.

The second chamber 30b, 32b of the brake cylinders 30, 32 provides the spring brake. The spring brake is used in the absence of fluid being provided (and is often called an emergency brake or parking brake). The spring brake is automatically applied in the absence of fluid (or when the pressure is below a predetermined pressure). The constant supply of fluid on the supply line 12 (through the connection to the towing vehicle) is used to hold the spring brake in a released position. When the trailer is unconnected to a towing vehicle or a park brake 40 is used, fluid is not permitted to the spring brakes and the spring brakes apply. A shunt assembly 42 is also present in the example illustrated. The shunt assembly 42 can be used manually to connect the trailer reservoir to the spring brakes. This allows the spring brakes to be released even if the trailer is not connected to a towing vehicle - for example, if the trailer needs to be moved without a towing vehicle (e.g. in a trailer park or on a ship).

In some embodiments, an accelerometer module (not shown) is provided on the trailer. The accelerometer module is communicatively coupled to the ECU 20 and sends data relating to the orientation of the accelerometer module (which is mounted in a known position relative to the trailer / wheelbase of the trailer). Thus, the ECU 20 can assess the orientation of the vehicle and estimate the gradient of the surface on which the vehicle / trailer is positioned or, at least, the gradient of the trailer itself.

In some embodiments, the accelerometer module provides data relating to an orientation along one axis (e.g. only in a vertical direction with respect to the trailer / vehicle). However, it should be appreciated that the accelerometer module may also be configured to send data relating to two or three axes (e.g. generally transverse of the vehicle / trailer and/or longitudinally of the vehicle / trailer).

As mentioned above, the EBS 22 controls the application of the service brake and more specifically, the ECU 20 is operable to control the first and second brake assemblies. In other words, the ECU 20 controls the first modulator such that the first brake assembly applies brake force to its associated wheel (or wheels) (e.g. through use of the build and hold states) and also controls the release of the brakes (e.g. using the exhaust state). Similarly, the ECU 20 controls the second modulator such that the second brake assembly applies brake force to its associated wheel (or wheels) (e.g. again through the use of the build and hold states) and also controls the release of the brakes (e.g. using the exhaust state).

This occurs regularly when the vehicle is travelling as the driver wishes to slow the vehicle during turns or other manoeuvres. As discussed, the driver uses the brake pedal to indicate a demand for braking - that generates a demand signal that is passed to the trailer system through the control line 14 and the electronic connection 16. The EBS 22 / ECU 20 acts on receipt of either one of the signals (i.e. pneumatic or electronic) to apply the brakes in the desired manner. The EBS 22 / ECU 20 is also operable to apply the brakes autonomously if necessary. This process may be part of a stability adjustment or other safety feature that detects if the vehicle is unstable, likely to roll or another dangerous situation. The ECU 20 controls the brake assemblies in the same manner to generate service braking force at the wheels. The brake demand signals are temporary (or at least demand temporary braking) and will usually be used to slow a vehicle or hold the vehicle stationary during an ongoing transport journey (at traffic lights or in a queue, for example).

When the vehicle is stationary, the driver may wish to use persistent braking to maintain the vehicle in a stationary position. For example, once a vehicle arrives at a docking station or another stopping location, the vehicle may be stationary for an extended period of time before being driven again. In some situations, the towing vehicle may be disconnected or the park brake 40 is used and, in that case, the spring brakes apply automatically to stop the trailer from rolling away / moving.

However, often the towing vehicle remains connected and the park brake 40 is not used. In other words, the braking system 10 continues to have access to fluid and the spring brakes are not applied. In this situation, the trailer may be held stationary using the service brakes (a so called "park-on-air" condition). This is achieved through the use of a persistent brake signal - i.e. the brake demand signal is either constant or indicates that continuous braking is required. This may be through a handbrake in the towing vehicle (it should be appreciated that another mechanism could be provided to actuate the "park-on-air" condition such as a switch or actuator). The ECU 20, on receipt of this signal, will control the first and second brake assemblies to apply the brakes to the wheels.

The ECU 20 is configured to operate in a specific manner when it encounters a specific set of signals. The method of operating the braking system will now be discussed. This method allows forces that can build in the trailer chassis to be dissipated - this is especially important when the trailer has been loaded or unloaded while stationary.

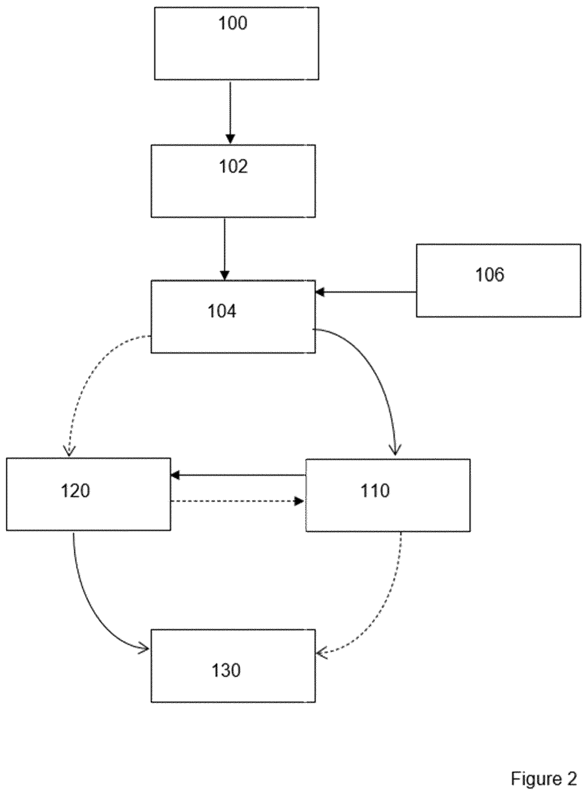

First, the ECU 20 assesses whether a first brake demand signal has been received (step 100 in figure 2). In embodiments, the first brake demand signal is a persistent demand signal as discussed above. In other words, the trailer is in a "park-on-air" condition (which may be triggered by use of the handbrake (or another switch)).

Second, the ECU 20 receives a second brake demand signal (step 102 in figure 2). In embodiments, the second brake demand signal is a temporary demand signal as discussed above. In other words, the driver has applied pressure to the foot brake pedal to generate a new brake demand for service braking. This temporary brake demand signal (i.e. the driver using the brake pedal) may be of the order of seconds or less. In other words, the brake pedal acts as a trigger.

In embodiments, the first and / or second brake demand signals are generated and sent by a towing vehicle connected to the trailer vehicle. It will be appreciated that this process is in line with the system and operation discussed in more detail above.

In response to receiving the second brake demand signal, the ECU 20 is operable to initiate (step 104 in figure 2) and perform a controlled brake release cycle (i.e. while all the trailer service brakes are applied, the controlled brake release cycle is initiated automatically by the ECU 20). The controlled brake release cycle includes releasing the first brake assembly followed by reapplying the first brake assembly (step 110 in figure 2), and then subsequently releasing the second brake assembly followed by reapplying the second brake assembly (step 120 in figure 2).

In other words, to start, the first brake assembly is operated to release all of its associated brakes. Thus, the pressure across the first side service brake chambers 30a is exhausted and the brake force on the associated wheels is reduced to zero. In embodiments, the brakes are completely released, so that no or substantially no pressure is retained in the chambers 30a (and, thus, no braking force is present).

Once the release is complete, the first brake assembly then reapplies the brakes. In other words, the pressure in the chambers 30a is built and the brake force on the associated wheels is increased to a predetermined level.

Once the first brake assembly has reapplied the brakes, the second brake assembly is operated to release all of its associated brakes. Thus, the pressure across the second side service brake chambers 32a is exhausted and the brake force on the associated wheels is reduced to zero. In embodiments, the brakes are completely released, so that no or substantially no pressure is retained in the chambers 32a (and, thus, no braking force is present).

Once the release is complete, the second brake assembly then reapplies the brakes. In other words, the pressure in the chambers 32a is built and the brake force on the associated wheels is increased to a predetermined level.

The configuration / specific brakes each brake assembly controls is discussed in detail above. Thus, it follows that this cycle is releasing and applying the brakes on one side of the vehicle first and then following that with the release and application of brakes on the second side of the vehicle.

This pattern may be followed even if there are additional brake assemblies. For example, if the trailer has four brake assemblies and the first and third brake assemblies control the front (one or more wheels on one or more axles) and back (one or more wheels on one or more axles) on the first side of the vehicle and the second and fourth brake assemblies control the front and back wheels respectively on the second side of the vehicle. There are multiple options for how the controlled brake release cycle could be completed.

In a preferred example, the first side brake assemblies (i.e. the first and third brake assemblies) are released and reapplied (together) first followed by the second side brake assemblies (i.e. the second and fourth brake assemblies) are released and reapplied (together).

Alternatively, the cycle could progress around the brake assemblies / trailer, so the first brake assembly is released and reapplied, followed by the second brake assembly. Then the fourth brake assembly (i.e. behind the second brake assembly) is released and reapplied, followed by the third brake assembly.

In the situation discussed above where a third brake assembly is provided to control an entire axle (e.g. controls brakes for each wheel on both sides of the vehicle), the first and second brake assembly may be released and reapplied as described above and the release and reapplication of the third brake assembly may be added to the end of each cycle. Alternatively, the third brake assembly in this situation maybe released and reapplied between the first and second brake assembly release and reapplication.

In some embodiments, the ECU 20 is operable to assess whether a controlled brake release cycle has occurred previously. If a positive response is present (i.e. that a controlled brake release has already occurred), the ECU 20 alters a subsequent controlled brake release.

In embodiments, the altered subsequent controlled brake release cycle reverses the previous order of brake assembly release and reapplication. In other words, the subsequent controlled brake release cycle includes first releasing the second brake assembly followed by reapplying the second brake assembly and, then, releasing the first brake assembly followed by reapplying the first brake assembly. This is illustrated by the dashed arrows on figure 2 (moving from step 104 to 120 and then to 110)

In some embodiments, the ECU 20 assesses when the previous controlled brake release occurred. The subsequent controlled brake release cycle may only be altered as described above if the previous controlled brake release cycle occurred within a predetermined time interval. Alternatively, the ECU 20 may alter the cycle only if the previous controlled brake release cycle was performed since vehicle ignition.

In some embodiments, reapplying any brake assembly and releasing the respective next brake assembly (i.e. the gap between the steps in the controlled brake release cycle) is separated by a predetermined time interval. In other words, the time between the first brake assembly (or second brake assembly) applying its associated brakes and the second brake assembly (or first brake assembly) releasing the brakes on the next part of the cycle is set by a predetermined rest time. As such, there is a rest time between the application of the brakes on one side of the vehicle and the release of the brake on the second side of the vehicle. The predetermined time interval is between around 0 and 1 seconds (and preferably, around 0.5 seconds).

In some embodiments, a brake assembly is released over a predetermined release interval. In other words, the pressure / brake force is reduced / exhausted (over the "release" part of the cycle) over a set time interval (for example, the first brake assembly releases its associated brakes over a set amount of time). More specifically, the modulator and brakes chambers 30a, 32a of the brake assembly are exhausted across a set window of time. In the present system, the release interval is between around 0 and 1 seconds (and preferably, around 0.5 seconds). In some embodiments, the brake assembly is released at a substantially constant rate over the release interval (this may be a "full" release of the pressure in the respective chamber 30a or 32a).

In some embodiments, the accelerometer module is used before the controlled brake release cycle is initiated. The ECU 20 completes a step of assessing a gradient of a ground surface on which the vehicle stands, or assessing a gradient of the vehicle. In other words, the ECU 20 receives data from the accelerometer module (step 106 in figure 2), from which it can assess whether the vehicle / trailer is on a slope.

In some embodiments, the implementation of the controlled brake release cycle is aborted if the gradient is higher than a predetermined gradient threshold. In other words, if the slope upon which the trailer / vehicle is located is inclined by more than the gradient threshold then the release cycle will not be started. In the present example, the gradient threshold is between around 2 to 4 degrees. It should be appreciated that this is the angle the slope or trailer (which will be substantially parallel to the ground surface it is on) makes with a horizontal plane. It should be appreciated that the gradient threshold should be set at a level that allows the controlled brake release cycle to proceed when it is safe to do so but aborts the process if there is a danger that the trailer / vehicle could roll away if the brakes are released. The lower level of the range given above (around 2 degrees) is chosen as this allows for the fact that the trailer / trailer deck may not be quite level or the ground could be uneven, which would not present an issue if the release cycle were to proceed.

In some embodiments, the ECU 20 is operable to abort the controlled brake release cycle if the second brake demand signal ends and / or drops to zero. Likewise, it may abort the controlled brake release cycle if the first demand signal ends. In other words, if the driver releases the hand brake (or the actuator in control of the persistent braking demand signal) and / or the foot brake before the brake release cycle is complete, the ECU 20 aborts the cycle and allows the vehicle to be driven away.

In some embodiments, the ECU 20 assesses if the vehicle has moved since ignition. This is in addition to using the first and second brake demand signals discussed above. Optionally, if the vehicle has moved since ignition, the ECU 20 will not proceed with the controlled brake release cycle.

Once the brake release cycle has finished the ECU 20 operated the first and second brake assemblies to ensure the pressure demanded by the higher of the first or second brake demand signal is met. Thus, the service brakes will be applied constantly to meet the brake demand until both all brake demand signals are removed. In a real life scenario, the driver will apply the handbrake (i.e. the first demand signal for persistent braking) when the vehicle stops (e.g. for loading or unloading or driver break or any number of other reasons). When the driver wishes to move the vehicle, the foot brake is used (i.e. a second brake demand is present). The ECU 20 initiates the controlled brake release cycle. Once the controlled brake release cycle is complete, the brakes will be applied at the level demanded by the signals present. Once the handbrake / "park-on-air" condition is disengaged (i.e. the first brake demand signal stops), the ECU 20 will operate the brake assemblies to meet the brake demand of the foot brake (i.e. the second brake demand signal).

When the driver releases the foot brake, the ECU 20 operates the brake assemblies accordingly to release the brakes entirely (step 130 in figure 2). The vehicle is then free to pull away and start its journey.

When used in this specification and claims, the terms "comprises" and "comprising" and variations thereof mean that the specified features, steps or integers are included. The terms are not to be interpreted to exclude the presence of other features, steps or components.

Modifications are possible within the scope of the invention, as defined by the appended claims.

## Claims

1. A method of operating a braking system (10) for a trailer vehicle including an electronic control unit (ECU) (20) which is operable to control at least a first brake assembly associated with at least a first wheel on a first side of the vehicle and a second brake assembly associated with at least a second wheel on a second side of the vehicle, wherein the method includes:
assessing (100) that a first brake demand signal corresponding to a demand for persistent braking has been received;
receiving (102) a second brake demand signal corresponding to a demand for temporary braking;
in response to receiving the second brake demand signal, performing (104) a controlled brake release cycle including:
releasing (110) the first brake assembly followed by reapplying the first brake assembly, and subsequently
releasing (120) the second brake assembly followed by reapplying the second brake assembly.

2. A method of operating a braking system (10) according to claim 1 including:
assessing whether a controlled brake release cycle has occurred previously and if a positive response is present, altering a subsequent controlled brake release to include:
releasing the second brake assembly followed by reapplying the second brake assembly, and subsequently
releasing the first brake assembly followed by reapplying the first brake assembly.

3. A method of operating a braking system (10) according to claim 2 wherein the previous controlled brake release cycle is within predetermined time interval to initiate alteration of the subsequent controlled brake release cycle.

4. A method of operating a braking system (10) according to any one of the preceding claims wherein reapplying any brake assembly and releasing the respective next brake assembly is separated by a predetermined time interval, and optionally the predetermined time interval is between around 0 and 1 seconds and preferably around 0.5 seconds.

5. A method of operating a braking system (10) according to any one of the preceding claims wherein a brake assembly is released over a predetermined release interval, and optionally the release interval is between around 0 and 1 seconds and preferably around 0.5 seconds, and optionally
wherein the brake assembly is released at a substantially constant rate over the release interval.

6. A method of operating a braking system (10) according to any one of the preceding claims further including a step of assessing (106) a gradient of a ground surface on which the vehicle stands, or assessing a gradient of the vehicle, and optionally
further including aborting the controlled brake release cycle if the gradient is higher than a predetermined gradient threshold, and optionally wherein the predetermined gradient threshold is between around 2 to 4 degrees, and/or
further including assessing if the vehicle has moved since ignition and optionally, if the vehicle has moved, aborting the controlled brake release cycle.

7. A method of operating a braking system (10) according to any one of the preceding claims further including assessing that both the first and second brake demand signals have ended and releasing all the brake assemblies to allow the vehicle to move, and/or
wherein when the first and second brake assemblies are reapplied, an associated pressure / brake force at its respective wheel is in accordance with the second brake demand, and/or
further including aborting the controlled brake release cycle if the second brake demand signal ends and / or drops to zero, and/or
wherein the first and / or second brake demand signals are generated and sent by a towing vehicle connected to the trailer vehicle.

8. A braking system (10) for a trailer vehicle, including
a first brake assembly associated with at least a first wheel on a first side of the vehicle,
a second brake assembly associated with at least a second wheel on a second side of the vehicle, and
an electronic control unit (ECU) (20) which controls operation of the first and second brake assemblies, wherein the ECU is operable to:
receive a first brake demand signal corresponding to a demand for persistent braking and apply the first and second brake assemblies, and
in response to receiving a second brake demand signal corresponding to a demand for temporary braking, perform a controlled brake release cycle in which the first brake assembly is released and reapplied and subsequently the second brake assembly is released and reapplied.

9. A braking system (10) according to claim 8 wherein the ECU (20) is operable to release and reapply the second brake assembly a second time and subsequently release and reapply the first brake assembly again as part of a subsequent controlled brake release cycle.

10. A braking system (10) according to claim 8 or 9 further including a third wheel which is associated with the first brake assembly and a fourth wheel while is associated with the second brake assembly.

11. A braking system (10) according to any one of claims 8 to 10 further including an accelerometer module which is operable to send data relating to an orientation of the vehicle or of a ground surface on which the vehicle stands to the ECU (20) so that a gradient of the vehicle can be calculated / assessed, and optionally wherein the accelerometer module provides data relating to an orientation along a singles axis, or along two axes or along three axes.

12. A braking system (10) according to claims 11 wherein the ECU (20) is operable to cancel a planned a controlled brake release cycle if the data from the accelerometer module indicates that the vehicle is on a gradient at or above a predetermined gradient threshold.

13. A braking system (10) according to any one of claim 8 to 12 further including a third brake assembly and the controlled brake release cycle further includes releasing and reapplying the third brake assembly.

14. A braking system (10) according to any one of claims 8 to 13 wherein the first brake demand signal is generated by a handbrake and/or wherein the second brake demand signal is generated by pressure applied to a foot pedal.

## Patentansprüche

1. Verfahren zum Betrieb eines Bremssystems (10) für ein Anhängerfahrzeug, beinhaltend eine elektronische Steuereinheit (ECU) (20), die betreibbar ist zum Steuern mindestens einer ersten Bremsenanordnung, die mit mindestens einem ersten Rad auf einer ersten Seite des Fahrzeugs assoziiert ist, und einer zweiten Bremsenanordnung, die mit mindestens einem zweiten Rad auf einer zweiten Seite des Fahrzeugs assoziiert ist, wobei das Verfahren beinhaltet:
Bewerten (100), dass ein erstes Bremsbedarfssignal, das einem Bedarf an einer Beharrungsbremsung entspricht, empfangen wurde;
Empfangen (102) eines zweiten Bremsbedarfssignals, das einem Bedarf an einer vorübergehenden Bremsung entspricht;
als Reaktion auf das Empfangen des zweiten Bremsbedarfssignals, Durchführen (104) eines kontrollierten Bremsfreigabezyklus, beinhaltend:
Freigeben (110) der ersten Bremsenanordnung, gefolgt von erneuter Betätigung der ersten Bremsenanordnung, und anschließend
Freigeben (120) der zweiten Bremsenanordnung, gefolgt von erneuter Betätigung der zweiten Bremsenanordnung.

2. Verfahren zum Betrieb eines Bremssystems (10) nach Anspruch 1, beinhaltend:
Bewerten, ob ein kontrollierter Bremsfreigabezyklus zuvor stattgefunden hat und, bei Vorliegen einer positiven Antwort, Ändern einer nachfolgenden kontrollierten Bremsfreigabe, um Folgendes einzuschließen:
Freigeben der zweiten Bremsenanordnung, gefolgt von erneuter Betätigung der zweiten Bremsenanordnung, und anschließend
Freigeben der ersten Bremsenanordnung, gefolgt von erneuter Betätigung der ersten Bremsenanordnung.

3. Verfahren zum Betrieb eines Bremssystems (10) nach Anspruch 2, wobei der vorherige kontrollierte Bremsfreigabezyklus innerhalb eines vorbestimmten Zeitintervalls liegt, um die Änderung des nachfolgenden kontrollierten Bremsfreigabezyklus einzuleiten.

4. Verfahren zum Betrieb eines Bremssystems (10) nach einem der vorhergehenden Ansprüche, wobei das erneute Betätigen einer beliebigen Bremsenanordnung und das Freigeben der jeweiligen nächsten Bremsenanordnung durch ein vorbestimmtes Zeitintervall getrennt sind und, optional, das vorbestimmte Zeitintervall zwischen rund 0 und 1 Sekunde und bevorzugt rund 0,5 Sekunden beträgt.

5. Verfahren zum Betrieb eines Bremssystems (10) nach einem der vorhergehenden Ansprüche, wobei eine Bremsenanordnung über ein vorbestimmtes Freigabeintervall freigegeben wird und, optional, das Freigabeintervall zwischen rund 0 und 1 Sekunde und bevorzugt rund 0,5 Sekunden beträgt und, optional,
wobei die Bremsenanordnung mit einer im Wesentlichen konstanten Rate über das Freigabeintervall freigegeben wird.

6. Verfahren zum Betrieb eines Bremssystems (10) nach einem der vorhergehenden Ansprüche, ferner beinhaltend einen Schritt des Bewertens (106) eines Gradienten einer Bodenfläche, worauf das Fahrzeug steht, oder des Bewertens eines Gradienten des Fahrzeugs und, optional,
ferner beinhaltend das Abbrechen des kontrollierten Bremsfreigabezyklus, wenn der Gradient höher als eine vorbestimmte Gradientenschwelle ist, und optional, wobei die vorbestimmte Gradientenschwelle zwischen rund 2 bis 4 Grad beträgt, und/oder
ferner beinhaltend das Bewerten, ob sich das Fahrzeug seit der Zündung bewegt hat und optional, wenn sich das Fahrzeug bewegt hat, das Abbrechen des kontrollierten Bremsfreigabezyklus.

7. Verfahren zum Betrieb eines Bremssystems (10) nach einem der vorhergehenden Ansprüche, ferner beinhaltend das Bewerten, dass sowohl das erste als auch das zweite Bremsbedarfssignal geendet haben, und das Freigeben aller Bremsenanordnungen, damit sich das Fahrzeug bewegen kann, und/oder
wobei, wenn die erste und die zweite Bremsenanordnung erneut betätigt werden, ein assoziierter Druck/eine assoziierte Bremskraft an ihrem jeweiligen Rad dem zweiten Bremsbedarf entspricht, und/oder
ferner beinhaltend das Abbrechen des kontrollierten Bremsfreigabezyklus, wenn das zweite Bremsbedarfssignal endet und/oder auf null abfällt, und/oder
wobei das erste und/oder zweite Bremsbedarfssignal von einem mit dem Anhängerfahrzeug verbundenen Zugfahrzeug erzeugt und gesendet wird/werden.

8. Bremssystem (10) für ein Anhängerfahrzeug, beinhaltend
eine erste Bremsenanordnung, die mit mindestens einem ersten Rad auf einer ersten Seite des Fahrzeugs assoziiert ist,
eine zweite Bremsenanordnung, die mit mindestens einem zweiten Rad auf einer zweiten Seite des Fahrzeugs assoziiert ist, und
eine elektronische Steuereinheit (ECU) (20), die den Betrieb der ersten und zweiten Bremsenanordnung steuert, wobei die ECU betreibbar ist zum:
Empfangen eines ersten Bremsbedarfssignals, das einem Bedarf an einer Beharrungsbremsung entspricht, und Betätigen der ersten und zweiten Bremsenanordnung, und
als Reaktion auf das Empfangen eines zweiten Bremsbedarfssignals, das einem Bedarf an einer vorübergehenden Bremsung entspricht, Durchführen eines kontrollierten Bremsfreigabezyklus, in dem die erste Bremsenanordnung freigegeben und erneut betätigt wird und anschließend die zweite Bremsenanordnung freigegeben und erneut betätigt wird.

9. Bremssystem (10) nach Anspruch 8, wobei die ECU (20) betreibbar ist, um die zweite Bremsenanordnung ein zweites Mal freizugeben und erneut zu betätigen und anschließend die erste Bremsenanordnung erneut als Teil eines nachfolgenden kontrollierten Bremslösezyklus freizugeben und erneut zu betätigen.

10. Bremssystem (10) nach Anspruch 8 oder 9, ferner beinhaltend ein drittes Rad, das mit der ersten Bremsenanordnung assoziiert ist, und ein viertes Rad, das mit der zweiten Bremsenanordnung assoziiert ist.

11. Bremssystem (10) nach einem der Ansprüche 8 bis 10, ferner beinhaltend ein Beschleunigungsmessermodul, das betreibbar ist, um Daten bezüglich einer Orientierung des Fahrzeugs oder einer Bodenfläche, worauf das Fahrzeug steht, an die ECU (20) zu senden, so dass ein Gradient des Fahrzeugs berechnet/bewertet werden kann, und optional, wobei das Beschleunigungsmessermodul Daten bereitstellt, die sich auf eine Orientierung entlang einer einzelnen Achse oder entlang zweier Achsen oder entlang dreier Achsen beziehen.

12. Bremssystem (10) nach Anspruch 11, wobei die ECU (20) betreibbar ist, um einen geplanten kontrollierten Bremsfreigabezyklus abzubrechen, wenn die Daten aus dem Beschleunigungsmessermodul angeben, dass sich das Fahrzeug auf einem Gradienten an oder oberhalb einer vorbestimmten Gradientenschwelle befindet.

13. Bremssystem (10) nach einem der Ansprüche 8 bis 12, ferner beinhaltend eine dritte Bremsenanordnung und wobei der kontrollierte Bremsfreigabezyklus ferner das Freigeben und erneute Beträtigen der dritten Bremsenanordnung beinhaltet.

14. Bremssystem (10) nach einem der Ansprüche 8 bis 13, wobei das erste Bremsbedarfssignal durch eine Handbremse erzeugt wird und/oder wobei das zweite Bremsbedarfssignal durch auf ein Fußpedal ausgeübten Druck erzeugt wird.

## Revendications

1. Procédé de fonctionnement d'un système de freinage (10) d'un véhicule remorqué équipé d'une unité de contrôle électronique (ECU) (20) pouvant être utilisée pour contrôler au moins un premier ensemble de freinage, associé à au moins une première roue sur un premier côté du véhicule, ainsi qu'un deuxième ensemble de freinage associé à au moins une deuxième roue sur un deuxième côté du véhicule, dans lequel le procédé consiste à :
déterminer (100) qu'un premier signal de demande de freinage, correspondant à une demande de freinage persistante, a été reçu ;
recevoir un deuxième signal de demande de freinage correspondant à une demande de freinage provisoire ;
répondant à la réception du deuxième signal de demande de freinage, exécuter (104) un cycle de desserrage de frein contrôlé afin d'inclure :
le desserrage (110) du premier ensemble de frein, puis la réapplication du premier ensemble de freinage, suivis du desserrage (120) du deuxième ensemble de freinage et de la réappplication du deuxième ensemble de freinage.

2. Procédé de fonctionnement d'un système de freinage (10) selon la revendication 1, consistant à :
déterminer si un cycle de desserrage de frein contrôlé a eu lieu auparavant et, si la réponse est positive, procéder à une modification d'un desserrage de frein contrôlé ultérieur afin d'inclure:
le desserrage du deuxième ensemble de freinage, puis la réapplication du deuxième ensemble de freinage, et ensuite
le desserrage du premier ensemble de frein, puis la réapplication du premier ensemble de freinage.

3. Procédé de fonctionnement d'un système de freinage (10) selon la revendication 2, dans lequel le précédent cycle de desserrage de frein contrôlé s'inscrit dans un intervalle de temps prédéterminé permettant d'exécuter une modification du cycle de desserrage de frein contrôlé ultérieur.

4. Procédé de fonctionnement d'un système de freinage (100) selon l'une quelconque des revendications précédentes, dans lequel la réapplication de n'importe quel ensemble de freinage et le desserrage de l'ensemble de freinage suivant respectif sont séparés par un intervalle de temps prédéterminé et, facultativement, l'intervalle de temps prédéterminé est de 0 à 1 seconde environ et de préférence de 0;5 seconde environ.

5. Procédé de fonctionnement d'un système de freinage (10) selon l'une quelconque des revendications précédentes, dans lequel un ensemble de freinage est desserré pendant un intervalle de desserrage prédéterminé et, facultativement, l'intervalle de desserrage est de 0 à 1 seconde environ et de préférence de 0,5 seconde environ et, facultativement,
dans lequel' l'ensemble de freinage est desserré à un rythme sensiblement constant pendant l'intervalle de desserrage.

6. Procédé de fonctionnement d'un système de freinage (10) selon l'une quelconque des revendications précédentes, comprenant en outre une étape consistant à évaluer (106) une inclinaison de la surface du sol sur laquelle est stationné le véhicule ou à évaluer une inclinaison du véhicule et, facultativement,
comprenant en outre l'arrêt du cycle de desserrage de frein contrôlé si l'inclinaison dépasse un seuil d'inclinaison prédéterminé et, facultativement, dans lequel le seuil d'inclinaison est de 2 à 4 degrés environ, et/ou
comprenant en outre une l'évaluation consistant à savoir si le véhicule a été déplacé depuis sa mise en marche et, facultativement, si le véhicule a été déplacé arrêtant le cycle de desserrage de frein contrôlé.

7. Procédé de fonctionnement d'un système de freinage (10) selon l'une quelconque des revendications précédentes, comprenant en outre à la fois une évaluation que le premier et le deuxième signaux de demande de freinage ont cessé, et le desserrage de tous les ensembles de freinage pour permettre au véhicule de se déplacer, et/ou
dans lequel, lorsque le premier et le deuxième ensembles de freinage sont réappliqués, une pression/force de freinage associée à la roue respective est conforme à la deuxième demande de freinage, et/ou
comprenant en outre l'arrêt du cycle de desserrage de frein contrôlé si le deuxième signal de demande de freinage cesse et/ou chute à zéro, et/ou
dans lequel le premier et/ou le deuxième signaux de demande de freinage sont générés et envoyés par un véhicule tracteur relié au véhicule remorqué.

8. Système de freinage (10) d'un véhicule remorqué, comprenant :
un premier ensemble de freinage, associé à au moins une première roue sur un premier côté du véhicule,
un deuxième ensemble de freinage associé à au moins une deuxième roue sur un deuxième côté du véhicule, et
une unité de contrôle électronique (ECU) (20) qui contrôle le fonctionnement du premier et du deuxième ensembles de freinage, dans lequel l'ECU peut être utilisée pour :
recevoir un premier signal de demande de freinage, correspondant à une demande de freinage persistante, et appliquer le premier et le deuxième ensembles de freinage, et
répondant à la réception d'un deuxième signal de demande de freinage, correspondant à une demande de freinage provisoire, exécuter un cycle de desserrage de frein contrôlé au cours duquel le premier ensemble de freinage est desserré puis réappliqué et, au cours duquel par la suite, le deuxième ensemble de freinage est desserré et réappliqué.

9. Système de freinage (10) selon la revendication 8, dans lequel l'ECU (20) peut être utilisée pour desserrer puis réappliquer le deuxième ensemble de freinage une deuxième fois et pour, ensuite, desserrer puis réappliquer une fois de plus le premier ensemble de freinage lors d'un cycle ultérieur de desserrage de frein contrôlé.

10. Système de freinage (10) selon soit la revendication 8, soit la revendication 9, comprenant en outre une troisième roue qui est associée au premier ensemble de freinage ainsi qu'une quatrième roue qui est associée au deuxième ensemble de freinage.

11. Système de freinage (10) selon l'une quelconque des revendications 8 à 10, comprenant en outre un module d'accéléromètre qui peut être utilisé pour envoyer à l'ECU (20) des données concernant l'orientation du véhicule ou une surface du sol où est stationné le véhicule, permettant ainsi de calculer/évaluer l'inclinaison du véhicule et, facultativement, dans lequel le module d'accéléromètre fournit des données concernant une orientation le long d'un seul axe ou le long de deux axes ou le long de trois axes.

12. Système de freinage (10) selon la revendication 11, dans lequel l'ECU (20) peut être utilisée pour annuler un cycle planifié et contrôlé de desserrage de frein au cas où les données émanant du module d'accéléromètre indiqueraient que le véhicule se trouve sur une inclinaison égale ou supérieure à un seuil d'inclinaison prédéterminé.

13. Système de freinage (10) selon l'une quelconque des revendications 8 à 12, comprenant en outre un troisième ensemble de freinage, et le cycle de desserrage de frein contrôlé inclut en outre le desserrage et la réapplication du troisième ensemble de freinage.

14. Système de freinage (10) selon l'une quelconque des revendications 8 à 13, dans lequel le premier signal de demande de freinage est généré par un frein à main et/ou dans lequel le deuxième signal de demande de freinage est généré par la pression exercée sur une pédale de frein.
